# EUROPEAN PATENT APPLICATION

(11) **EP 4 811 738 A1**
(43) Date of publication of application: **23.09.2026**
(21) Application number: 25165080.0
(22) Date of filing: 20.03.2025
(51) Int. Cl.: H04L 41/0823, H04L 41/08, H04L 41/14, H04L 41/16, H04W 16/18, H04W 24/02, H04L 41/142, H04L 41/147

(54) **ORCHESTRATING SETS OF INTERDEPENDENT OPTIMIZATION MODELS IN OPENRAN**

(71) Applicant: Deutsche Telekom AG, 53113 Bonn (DE)
(72) Inventor: FLORATH, Andreas, 4730 Raeren (BE)
(74) Representative: karo IP

(57) **Abstract**

A method and system for organizing and optimizing sets of dependent and/or interdependent optimization models (OMs) in an Open Radio Access Network (OpenRAN) environment, the method comprising:
- storing a set of OMs, especially initial OMs for network management, in a storage module, ,
- retrieving OMs from the storage module by a scheduler module, wherein the scheduler selects an optimized set of OMs for deployment based on predefined parameters,
- deploying the selected OMs into a live OpenRAN environment to manage network operations,
- a monitoring module collects network data from the deployed OMs, including especially performance metrics, logs, and optimizer state information, and forwards the collected data to an optimizer module,
- optimizing the deployed OMs using an optimizer module especially based on predifind objective functions and
- storing the optimized OMs back in the storage module, ensuring that future deployments use improved models especially selected according to objective function values.

## Description

The invention relates to a method and a system for organizing and optimizing sets of interdependent optimization models (OMs) in an Open Radio Access Network (OpenRAN) environment

Modern mobile networks are evolving toward more open and flexible architectures to accommodate increasing data demands, diverse use cases, and the need for greater operational efficiency. Open Radio Access Network (OpenRAN) is an emerging approach that promotes interoperability, vendor neutrality, and software-driven network management. Unlike traditional RAN solutions, which rely on proprietary hardware and software integrations, OpenRAN (Open Radio Access Network) is a framework that promotes open and interoperable interfaces in the Radio Access Network (RAN) of mobile networks. It enables network operators to use hardware and software components from multiple vendors instead of relying on proprietary solutions from a single vendor

Especially the increasing adoption of AI and machine learning (ML) models in OpenRAN environments is significantly enhancing network automation and optimization. These models enable intelligent resource allocation, traffic prediction, and network adaptation based on real-time conditions and objective functions. In the context of OpenRAN optimization, such an objective function is a mathematical function used to evaluate and guide the optimization process of different optimization models (OMs). It quantifies how "good" or "optimal" a particular solution is based on certain network performance metrics. However, due to the complexity especially of AI/ML models and their interdependencies, efficiently managing and optimizing these models remains a critical challenge. Ensuring accurate and reliable model performance requires a structured approach to selecting, deploying, and continuously refining optimization models (OMs) while accounting for evolving network conditions. Thereby the OMs are entities that can be used for optimization problems, including but not limited to AI/ML models, or randomized and not randomized optimization methods like Monte-Carlo-Tree-Search, Simulated Annealing or Generic Algorithms.

The object of the invention is to provide a method and system that effectively address these challenges by enabling efficient management, selection, deployment, and optimization of interdependent models in OpenRAN environments.

This object is solved by the method of claim 1 and the system of claim 19. The dependent claims cover advantageous embodiments of the invention.

The claimed method efficiently manages and optimizes multiple dependent and/or interdependent optimization models in an OpenRAN environment. It achieves this through simulation, model selection, performance monitoring, and continuous refinement based on real-world data and provided objective functions.

For this purpose, a digital twin module represents a virtual representation of the OpenRAN environment, enabling the evaluation of different network scenarios under predefined conditions or real-time input data. Using this simulated environment and additional real-time or historical network data, an optimizer module generates a scenario that includes a set of relevant optimization models and their interdependencies.

A scheduler module selects the best combination from a storage module based on the the objective function. The scheduler then deploys the selected models into the actual OpenRAN environment to manage network operations effectively. After deployment, a monitoring module continuously collects network data, including system performance metrics, logs, and the current state of the optimization models.

To improve the objective function value, the optimizer module adapts optimization modules and runs simulations in the digital twin environment to test how well these optimizations perform under different network conditions. The updated models are then stored in the storage module for future use.

Finally, the scheduler module redeploys the optimized models into the OpenRAN environment, ensuring that network operations benefit from continuous improvement. This process allows the system to dynamically adapt to changing network conditions, enhancing efficiency, reliability, and overall network performance.

For optimizing OMs in OpenRAN all this is done in a continuous feedback loop.

By providing a structured framework for selecting, deploying, monitoring, and refining optimization models (OMs), the system ensures efficient OpenRAN operation. A storage module maintains a repository of optimization models, especially categorized by radio access technology, cell type, and frequency band. The scheduler selects and deploys the most suitable models based on predefined optimization parameters (objective function values) and real-time network conditions.

The monitoring module continuously tracks key performance indicators such as throughput, latency, and packet loss, providing real-time insights into model performance.

To ensure models are validated before deployment, the digital twin environment may replicate various network conditions, including urban and rural settings, as well as different operational scenarios such as handovers and cell reselections. Once optimization is completed, the updated models are stored in the storage module for future selection and deployment.

By combining real-time data-driven optimization, scenario-based model selection, and digital twin-based validation, the invention orchestrates interdependent optimization models efficiently. This reduces operational complexity, enhances OpenRAN adaptability, and ensures that optimization models remain reliable under evolving network conditions.

Since optimization models interact with other optimization models, the optimizer module may continuously assess their interdependencies. These dependencies arise when different models interact, such as a traffic load predictor influencing a handover optimization model or a power efficiency model affecting resource allocation strategies. The optimizer module evaluates these interactions to prevent conflicts and ensure coherent decision-making across models. By leveraging dependency graphs and scenario-based validation in the digital twin module, the system can preemptively resolve conflicting configurations before deployment, ensuring stable and efficient OpenRAN operations.

Following preferred embodiments are described:
In one preferred embodiment, the system implements a continuous feedback loop to optimize the selection and performance of optimization models in OpenRAN. By continuously leveraging real-time performance data, digital twin-based validation, and iterative refinement, the system may adapt models dynamically to shifting network conditions. This approach enhances the reliability of deployed models, minimizes performance degradation, and allows for proactive adjustments before potential issues impact network operations. Additionally, the feedback loop reduces or even eliminates manual intervention by automating model refinement based on actual network behaviour, leading especially to increased efficiency and operational stability.

In another preferred embodiment, the optimizer module updates the storage module with refined optimization models and dynamically modifies the scenario before redeployment. This ensures that optimization scenarios remain aligned with real-time network conditions and prevents repeated deployment of outdated or ineffective models. By continuously adapting to shifting traffic patterns, evolving network topologies, and new service demands, the system enhances the responsiveness and efficiency of OpenRAN deployments. Additionally, preemptively modifying scenarios mitigates cascading failures that could arise from deploying suboptimal models under new network conditions.

In a further advantageous embodiment, the optimizer module classifies optimization models as either static, which remain unchanged, or dynamic, which require continuous adaptation. This classification enables more efficient resource allocation by directing computational power toward refining models that significantly impact network performance. Static models maintain stability for core network functions, while dynamic models respond in real time to evolving challenges such as congestion, interference, or sudden surges in demand. By distinguishing between these categories, the system achieves an optimal balance between network stability and adaptability, ensuring efficient OpenRAN operations under fluctuating conditions.

In another preferred embodiment, the scheduler module retrieves optimization parameters and searches for the most suitable optimization models from the storage module based on the generated scenario. By analysing real-time traffic loads, resource availability, and predefined optimization criteria, the system ensures that only the most effective models are selected for deployment. This approach minimizes the risk of deploying ineffective models that could degrade network performance while also reducing computational overhead by avoiding unnecessary processing of irrelevant models.

In a preferred embodiment, the optimizer module enhances dynamic optimization models using AI-based techniques such as reinforcement learning, deep learning, transfer learning, and evolutionary algorithms. These techniques enable the system to continuously improve model accuracy and adaptability by learning from historical performance data and real-time network fluctuations. By leveraging AI-driven optimization, OpenRAN networks remain efficient even under unpredictable conditions, reducing the need for manual intervention and enabling self-optimizing network behaviour.

Preferably, the optimizer module evaluates interdependencies between multiple optimization models to ensure coordinated optimization. Many optimization models share resources, influence overlapping network parameters, or depend on each other's outputs. By analysing these interdependencies, the system prevents conflicts, resolves bottlenecks, and ensures that models work together effectively rather than competing for limited network resources. This improves overall efficiency and ensures that optimizations applied at one level do not have unintended negative consequences on other parts of the network.

It is advantageous if the optimizer module simultaneously optimizes multiple objective functions, such as network latency, energy efficiency, resource utilization, and Quality of Service. This approach allows the system to balance competing priorities, ensuring that OpenRAN networks operate with both high performance and optimal resource efficiency. By considering multiple objectives rather than focusing solely on a single metric, the system can dynamically adjust optimization strategies to meet service-level agreements while minimizing costs.

Preferably, the optimizer module dynamically modifies the scenario by continuously evaluating real-time network conditions, historical data trends, and detected deviations from expected performance. This proactive approach ensures that optimization models remain relevant and effective, even as network demands fluctuate due to traffic surges, infrastructure changes, or evolving user behaviour. By leveraging real-time data, the system can adjust optimization strategies in advance, preventing performance degradation before it affects network operations. Additionally, historical data allows the optimizer to detect long-term trends and recurring patterns, enabling more informed and predictive decision-making. By promptly identifying deviations from expected performance, the system can implement corrective actions to minimize inefficiencies and maintain stable, high-performance OpenRAN operations. This dynamic adaptation reduces the need for manual intervention and ensures continuous, self-optimizing network behaviour.

In an advantageous embodiment, the optimizer module adapts optimization strategies based on the network's contextual environment, considering factors such as urban versus rural deployment, indoor versus outdoor conditions, and varying user mobility patterns. This contextual awareness ensures that optimization models are fine-tuned to address the unique challenges of different network settings. For instance, in densely populated urban areas, the system prioritizes especially load balancing and interference mitigation, while in rural deployments, it focuses on maximizing coverage and optimizing power efficiency. Similarly, indoor networks require optimizations for signal penetration and distributed antenna systems, whereas outdoor networks must handle dynamic weather conditions and larger coverage zones. By aligning optimization strategies with real-world deployment conditions, the system enhances network stability, improves service quality, and ensures OpenRAN networks operate efficiently across diverse environments.

Further preferably, the optimizer module employs self-learning mechanisms that continuously adjust hyperparameters and optimization model configurations through automated parameter tuning, Bayesian optimization, or meta-learning techniques. This enables the system to refine optimization strategies dynamically, improving performance without requiring manual intervention. By leveraging automated parameter tuning, the optimizer can iteratively test and adjust key settings to find the most efficient configurations for different network conditions. Bayesian optimization enhances this process by intelligently selecting parameter values that maximize performance while minimizing computational overhead. Additionally, meta-learning techniques allow the system to learn from past optimizations, enabling faster adaptation to new scenarios and reducing the time required for model convergence. By incorporating these self-learning capabilities, the system ensures that OpenRAN networks remain efficient, adaptive, and capable of handling evolving traffic patterns and network conditions with minimal human oversight.

In an advantageous embodiment the system incorporates human-in-the-loop intervention, allowing network operators to provide feedback on optimization model performance, override automated decisions, or manually fine-tune optimization settings. This ensures that while the system operates autonomously, human expertise can be leveraged to address complex or unforeseen network conditions that may not be fully captured by automated processes. Operators can refine optimization strategies based on operational insights, regulatory requirements, or specific service-level agreements, enhancing the adaptability and reliability of OpenRAN networks. By enabling manual intervention, the system also provides greater transparency and control, ensuring that optimization models align with business objectives and technical constraints while still benefiting from automation-driven efficiency improvements.

In a preferred embodiment, the digital twin module differentiates between static, dynamic and historical data to improve scenario evaluation. Static data, such as infrastructure layouts and cell placement, ensures an accurate baseline representation of the network, historical data allows for trend analysis and predictive modelling, while dynamic data models different usage patterns. By distinguishing between these three types of data, the system enhances the accuracy of simulations and reduces the risk of incorrect optimizations based on outdated or irrelevant information.

### Detailed description of the single modules

The following descriptions list a lot of details. These details are provided to get an impression, what a complete technical solution can contain. Off course not all details need to be present in a possible technical implementation. The optional elements are appropriately marked. Typically, the more information is available (e.g. the more optional datapoints), the better the result and optimization.

### Storage Module

The storage module in an OpenRAN environment serves as a centralized repository for managing and maintaining a comprehensive catalog of optimization model instances. Each optimization model may be uniquely identified by a system-wide name and version number, ensuring efficient tracking, version control, and management of changes across different models. This structured approach allows for seamless integration of new models, updates, and refinements while maintaining consistency across the OpenRAN system.

Each optimization model stored in the module may contain several key attributes that define its characteristics and operational requirements. These include a unique identifier and version number, a structured description of input and output data, and details regarding computational resource needs for training, fine-tuning, and inference. Some models may include additional metadata, such as predictability flags indicating whether the output contains random elements, quality assessment metrics evaluating performance accuracy, and Quality of Service indicators such as latency, runtime, and throughput. The storage module also tracks dependencies between different models, allowing for the identification of interconnections and potential conflicts in OpenRAN operations.

Beyond basic model storage, the system may maintain detailed records of each optimization model's lifecycle, including validation history, model lineage, and usage statistics. Validation history provides insights into past performance metrics, test data, and validation results, ensuring transparency and reproducibility. Model lineage records all modifications and updates made to a model, allowing for tracking of version changes over time. Additionally, usage statistics help identify the most frequently used models and highlight areas where improvements may be needed. To further enhance security and compliance, the system can include security clearance levels for each model, ensuring that access is restricted based on predefined authorization protocols

To optimize efficiency, the storage module may incorporate automated processes that streamline dependency management, resource allocation, model comparison, and recommendation generation. Dependency management ensures that all related optimization models function cohesively by automatically detecting and resolving interdependencies, such as those between radio resource allocation, handover management, and traffic routing models. Resource allocation is dynamically adjusted based on real-time OpenRAN production requirements, ensuring that sufficient computational, storage, and networking resources are available for deploying and operating optimization models.

The system may also provide model comparison tools that allow users to evaluate different optimization models based on performance, accuracy, and resource consumption. This feature enables informed decision-making when selecting models for specific use cases, such as comparing different machine learning algorithms for predicting network congestion or optimizing cell coverage. Additionally, an AI-powered recommendation engine suggests the most suitable optimization model for a given scenario by analysing historical data, performance trends, and real-time network conditions.

For AI-driven optimization models, the storage module may include additional features that enhance explainability, interpretability, and fairness. Explainability tools provide insights into how AI-based models arrive at decisions, ensuring transparency in resource allocation and network optimization. Model interpretability tools help network operators understand the strengths and limitations of AI-based models, identifying potential biases in decision-making processes. Fairness and bias detection algorithms further ensure that optimization models allocate resources equitably, preventing unintended prioritization of certain users or applications over others.

By integrating these capabilities, the storage module plays a critical role in the efficient management of optimization models in OpenRAN environments. It ensures the seamless deployment, monitoring, and refinement of models while maintaining security, transparency, and adaptability to evolving network conditions.

### Scheduler Module

The scheduler module is a key component of the OpenRAN optimization system, responsible for selecting the most suitable combination of optimization models for deployment in the telecommunication network. To ensure optimal performance, the scheduler considers multiple factors specific to the OpenRAN environment, allowing it to make informed decisions that balance network performance, resource efficiency, and operational goals.

One of the primary aspects the scheduler evaluates is radio resource availability. This includes assessing available bandwidth, power levels, and antenna configurations to determine which optimization models can be deployedto get an optimal resultThe Quality of Service requirements of each optimization model are also taken into account, including priority levels, tolerance for delay and jitter, and overall reliability under varying traffic conditions.

Beyond technical considerations, the scheduler also accounts for broader network behaviour and strategic objectives. It evaluates the interdependencies between different optimization models, recognizing shared radio resources, overlapping coverage areas, and scenarios requiring coordinated multi-point transmission. In some cases, the scheduler assesses the predictability of a given optimization model, determining whether it can generalize effectively to new network conditions or adapt to sudden shifts in topology and traffic patterns. Telecom business objectives, such as maximizing revenue, reducing operational costs, and enhancing customer satisfaction, can also be incorporated into the decision-making process to align optimization strategies with organizational goals. Additionally, the scheduler ensures compliance with telecommunication regulations, including spectrum licensing, electromagnetic compatibility, and data protection standards.

To improve decision-making under uncertain conditions, the scheduler may assess risks associated with network congestion, interference, or fluctuations in user behaviour. It can also integrate feedback from human operators, allowing them to provide insights on optimization model performance and suggest improvements where necessary. This human-in-the-loop approach ensures that expert knowledge is factored into the selection process, particularly in cases where automated decision-making may require fine-tuning or additional oversight.

To optimize the selection process, the scheduler employs advanced optimization techniques that enable it to find the best combination of models for deployment. Evolutionary algorithms, such as genetic programming and evolution strategies, are used to search for solutions that balance competing objectives, such as network throughput, latency, and energy efficiency. Reinforcement learning techniques allow the scheduler to learn from past decisions, refining its model selection strategy based on trial and error as network conditions change. Additionally, multi-objective optimization techniques enable the scheduler to balance multiple priorities simultaneously, such as maximizing performance while minimizing energy consumption and operational costs.

By leveraging these advanced techniques, the scheduler module ensures that OpenRAN networks operate efficiently, adapting dynamically to changing conditions while maintaining compliance with regulatory standards and business objectives. Its ability to integrate technical, strategic, and regulatory considerations makes it a crucial element in the overall optimization framework, contributing to improved network reliability, efficiency, and adaptability.

### Monitoring Module

The monitoring module is a critical component of the OpenRAN optimization system, responsible for continuously collecting and processing data from the telecommunication network. Designed to be highly automated and scalable, the module specializes in monitoring interdependent optimization models, ensuring that real-time network conditions are accurately assessed and used for ongoing optimization. By gathering key performance indicators, traffic patterns, and system logs, the monitoring module provides valuable insights that support data-driven decision-making and proactive network management.

The module collects a diverse range of data from the OpenRAN environment, enabling comprehensive analysis and troubleshooting. This includes radio access network logs that capture performance details, errors, and warnings, allowing for rapid issue identification and resolution. Network performance data such as throughput, latency, and packet loss are continuously measured, providing a clear view of overall system health. Additional parameters such as cell-specific data, user equipment details, and network function performance metrics help refine optimization strategies, ensuring that the network operates efficiently. The monitoring module also tracks radio frequency metrics, evaluating signal strength and quality to optimize radio performance. Furthermore, traffic patterns and Quality of Experience metrics, including Mean Opinion Score and latency, are analysed to enhance user experience and maintain high service quality.

Once data is collected, the monitoring module processes and analyses it using advanced techniques to extract meaningful insights. Anomaly detection algorithms identify unusual patterns or outliers in network behaviour, allowing for early detection of potential issues that may impact performance. Predictive modelling techniques enable forecasting of future network conditions, allowing for proactive maintenance and optimization. Additionally, correlation analysis examines relationships between various metrics, such as the effect of radio signal strength on user equipment throughput, helping to fine-tune optimization models and improve network efficiency.

To ensure the security and integrity of collected data, the monitoring module implements strict data governance policies. Sensitive data is encrypted both in transit and at rest, preventing unauthorized access or breaches. Role-based access control mechanisms regulate who can access monitoring data, ensuring that only authorized personnel can interact with sensitive network information. Furthermore, the module is designed to comply with relevant regulatory standards, such as GDPR, HIPAA, or CCPA, ensuring that OpenRAN network monitoring adheres to established data protection and privacy guidelines.

By integrating continuous data collection, advanced analytics, and stringent security measures, the monitoring module plays a crucial role in maintaining and optimizing OpenRAN networks. Its ability to detect anomalies, predict network behaviour, and correlate performance data ensures that optimization models remain accurate and effective, ultimately improving network reliability, efficiency, and user experience.

### Optimizer Module

The optimizer module is a fundamental component of the OpenRAN optimization system, responsible for analysing data from the monitoring module to enhance the performance, accuracy, and reliability of interdependent optimization models. By leveraging advanced algorithms and optimization techniques specifically designed for telecommunications, the module identifies inefficiencies, refines existing models, and ensures continuous adaptation to dynamic network conditions. Through automated processes, it improves decision-making across multiple layers of OpenRAN, from individual model tuning to large-scale network-wide optimization.

To fine-tune optimization models, the optimizer module employs automated parameter tuning techniques, including grid search, random search, and Bayesian optimization. These techniques allow for the dynamic adjustment of radio access network parameters and transport network settings, improving the adaptability of models to evolving network conditions. The module also plays a critical role in model selection and pruning by identifying and removing underperforming models, thereby reducing computational complexity and enhancing overall system efficiency. Furthermore, it constructs a knowledge graph that maps relationships between optimization models, network components, and user behaviour, enabling more informed and context-aware optimization decisions.

For advanced analytics, the optimizer module provides additional capabilities such as explainability and interpretability assessments, ensuring transparency in model behaviour and decision-making processes. It estimates uncertainty in dynamic network environments, allowing for more informed decisions when network conditions are unpredictable. Robustness and fault tolerance analyses are conducted to assess how optimization models perform under stress conditions, ensuring that models remain reliable in critical telecommunication infrastructure. Additionally, the module enables transfer learning and meta-learning across different OpenRAN scenarios, facilitating knowledge sharing and improving system-wide efficiency.

To maintain model reliability over time, the optimizer module incorporates drift detection mechanisms that monitor model performance and detect deviations caused by changes in network conditions or traffic patterns. It also performs data quality assessments to identify noise, bias, or missing values in OpenRAN data sources, ensuring that optimization models are trained on high-quality data. Furthermore, fairness and bias analysis tools are integrated to prevent models from reinforcing biases in telecommunication services, ensuring equitable resource allocation and decision-making.

The optimizer module is fully automated, leveraging machine learning algorithms and statistical techniques specifically tailored for OpenRAN environments. It is designed to address the unique characteristics of OpenRAN systems, including their interdependencies, evolving network structures, and performance constraints. By incorporating these features, the optimizer module provides a comprehensive optimization framework that enhances the efficiency, accuracy, and reliability of interdependent optimization models in complex telecommunication networks.

### Simulation, Emulation, and Digital Twin Environment (SEDE)

The digital twin module provides a controlled testing environment that replicates real-world OpenRAN conditions. By simulating different scenarios, such as network congestion, sudden user mobility, or infrastructure failures, the digital twin allows the system to evaluate optimization strategies before deploying them in a live network. This minimizes operational risks by preventing inefficient configurations from being implemented directly. Additionally, the digital twin continuously synchronizes with real-time production data, allowing the system to refine models dynamically based on evolving network condition.

The Simulation, Emulation, and Digital Twin Environment (SEDE) is a fully automated and sophisticated testing platform designed to improve the performance of optimization model (OM) instances in OpenRAN and telecommunication networks. This environment allows the system to evaluate OM performance within a controlled and simulated setting, minimizing the risks associated with deploying untested models in live production networks.

The SEDE includes advanced simulation capabilities, enabling it to replicate real-world OpenRAN and telecommunication network environments. It supports Radio Access Network (RAN) simulation by generating synthetic data that mirrors actual RAN input, including statistical distributions, correlations, and anomalies in cell coverage, user density, and traffic patterns. Additionally, the system provides Network Function Virtualization (NFV) simulation, allowing for the emulation of NFV-level characteristics such as virtual network function performance, network slicing, and service chaining to assess OM performance under different operational conditions. Furthermore, the SEDE facilitates scenario-based testing for telecommunication networks by simulating specific events or environmental changes, such as shifts in user behaviour, unexpected data drift, or network congestion, ensuring the robustness of OMs in OpenRAN deployments.

Beyond simulation, the SEDE also provides emulation capabilities that mimic the behaviour of individual components or entire systems in OpenRAN and telecommunication networks. It supports OM emulation for RAN optimization by replicating the interactions and dependencies of various OMs, allowing for the optimization of RAN parameters such as cell coverage, handover procedures, and resource allocation. Additionally, the SEDE enables system component emulation for telecommunication networks by mimicking the behaviour of network elements, including baseband units, remote radio heads, and transport networks. This ensures seamless OM integration within OpenRAN infrastructure and improves overall network efficiency.

To enhance its testing capabilities, the SEDE integrates digital twin technology to create a virtual replica of OpenRAN and telecommunication network environments.

Through real-time synchronization with network telemetry, the digital twin continuously updates itself with live data from the production environment, including network telemetry, performance metrics, and user feedback. Moreover, the SEDE employs predictive analytics for network optimization, utilizing machine learning models to forecast future network behaviour. This enables proactive OM adjustments and enhances network performance by anticipating operational challenges before they impact service quality.

The SEDE also incorporates advanced testing features to thoroughly evaluate the effectiveness of optimized OM instances in OpenRAN and telecommunication networks. A/B testing for RAN optimization allows for a controlled comparison of different OM versions or configurations under varying RAN parameters and scenarios, ensuring that the most effective models are selected. Additionally, the system employs multi-armed bandit testing for network optimization, dynamically distributing network traffic between multiple OM versions to enhance performance while minimizing inefficiencies in OpenRAN environments. To further ensure robustness, the SEDE conducts stress tests on OMs under extreme conditions such as high network loads, degraded data quality, and sudden shifts in user behaviour. These testing mechanisms collectively enable more resilient and adaptive network optimization, reducing deployment risks and improving overall system reliability.

### Further advantages of the invention

In general, the invention enhances the optimization of complex RAN and network configurations by automating the selection, deployment, and maintenance of optimal model configurations in OpenRAN and telecommunication networks. This significantly reduces complexity and minimizes, or in some cases eliminates, the need for manual intervention when managing interdependent optimization models for RAN optimization, network slicing, and service chaining.

By continuously monitoring and refining optimization models, the system ensures accurate and reliable network performance. It selects and optimizes the most effective model combinations to produce consistent and high-quality results, even in dynamic network environments with varying user demand, traffic patterns, and network conditions.

Network performance is further improved through continuous monitoring and optimization. By analysing collected telemetry data, the optimizer module detects areas for enhancement and adjusts OMs accordingly. This leads to better network performance, including increased throughput, reduced latency, and enhanced quality of service.

The system supports a diverse range of optimization models tailored to OpenRAN and telecommunication networks. It accommodates AI and ML-based models for predictive maintenance, anomaly detection, and traffic forecasting, as well as rule-based systems for policy management and enforcement. Additionally, the system integrates with randomized optimization methods, ensuring flexibility in addressing various network challenges.

By automating the management and optimization of OMs, the system significantly reduces operational costs. It minimizes manual intervention, lowering labor costs and improving resource allocation for network maintenance, upgrades, and performance optimization.

Scalability is a key advantage, as the system is capable of efficiently managing and optimizing large-scale deployments of interdependent OMs. This allows network operators to expand their OpenRAN and telecommunication networks seamlessly, supporting growing user demand and increasingly complex network infrastructures.

Finally, the system enhances explainability and interpretability in network decision-making. By providing insights into OM performance and behaviour, it enables a deeper understanding of AI and ML-based optimization decisions. This transparency helps network operators make informed decisions regarding network optimization, maintenance, and future upgrades.

### Possible Generalisation

The system and method can be adapted to support various types of optimization models beyond those initially designed for OpenRAN environments.

One possible extension is the optimization of rule-based systems, which are commonly used in decision support, expert systems, and business process management. The system can be applied to enhance the efficiency and accuracy of these models by refining their decision-making processes and improving their adaptability to changing conditions.

Additionally, the system can optimize hybrid models by combining AI/ML-based optimization methods with other approaches. This enables the development of hybrid strategies that leverage the strengths of multiple methodologies, resulting in more robust and flexible optimization solutions.

Beyond AI/ML applications, the system and method can also be extended to various other domains, such as logistics, finance, and healthcare. By applying its optimization techniques to these industries, the system can improve operational efficiency, predictive analytics, and decision-making processes.

Furthermore, the system is designed to integrate with emerging technologies such as the Internet of Things (IoT), blockchain, and edge computing. These integrations enhance the efficiency and effectiveness of optimization models by enabling distributed processing, real-time data synchronization, and improved decision-making capabilities in dynamic environments.

Following some applications are explained on the base of advantageous embodiements.

Generally, in an OpenRAN environment, synchronizing reality with the digital twin involves a structured approach that differentiates between static and dynamic data. The digital twin is primarily constructed using static information such as cell placement, infrastructure details, and network topology. This foundational data ensures that the virtual model accurately represents the physical network and serves as a reliable reference for simulations and optimizations.

In addition to static data, historical data plays a crucial role in comprehensive simulations. Since real-time updates are not always necessary for relatively stable network components, historical records of past network changes and usage patterns are maintained. These records allow for thorough simulations and trend analysis, providing valuable insights into long-term network behavior.

Beyond historical records, the digital twin also supports simulated changes to evaluate future network scenarios. This enables network operators to test potential modifications, such as adding or moving cells, without impacting the live environment. By providing a risk-free testing ground, the digital twin enhances planning and optimization before implementation.

While the digital twin primarily focuses on static and historical data, dynamic data, such as traffic patterns, key performance indicators, logs, and error reports, is continuously utilized by other modules such as the optimizer and scheduler. These modules handle real-time feedback loops and the deployment of optimized models, ensuring that the network remains adaptable to changing conditions. The digital twin, therefore, serves as an essential tool for predictive modeling and scenario analysis, while real-time network operations are managed by dedicated optimization components.

**First Example:** Optimizing Traffic Management in OpenRAN Using Interdependent Optimization Models.

Efficient traffic management is essential for maintaining high network performance and user satisfaction in an Open Radio Access Network (OpenRAN) environment. This example illustrates how the system coordinates three interdependent optimization models (OMs): a Traffic Predictor, a Resource Allocator, and a Handover Manager. Each of these models plays a critical role in optimizing network performance by forecasting traffic demand, allocating resources effectively, and ensuring seamless user transitions between network cells.

### Traffic Predictor: Anticipating Network Demand

The Traffic Predictor model is responsible for forecasting network traffic based on historical data and real-time inputs. It analyzes past traffic patterns, ongoing user activity, and special event data to predict future network congestion levels. These predictions allow the system to anticipate demand surges and proactively allocate network resources. The Traffic Predictor requires significant computing power, utilizing GPUs for training and moderate CPU capacity for inference. Its output, a forecast of traffic volume for each network cell, serves as a key input for the Resource Allocator, which determines how bandwidth and power should be distributed.

### Resource Allocator: Distributing Network Resources

Once the Traffic Predictor generates traffic forecasts, the Resource Allocator takes over by determining the optimal distribution of available resources. It considers traffic predictions, current resource usage, and cell capacity to generate an optimized resource allocation plan. This plan ensures that network bandwidth and power are distributed efficiently to maintain stable performance. Running on edge servers with dynamic adjustment capabilities, the Resource Allocator continuously fine-tunes allocations in response to changing network conditions. Its output is then used by the Handover Manager to decide how and when to transition users between network cells.

### Handover Manager: Ensuring Seamless Transitions

The Handover Manager is responsible for managing user handovers between cells to maintain a consistent and high-quality connection. It processes real-time data on resource allocation, user equipment (UE) location, and signal strength to determine the best possible handover timing. By minimizing dropped calls and reducing latency during transitions, the Handover Manager enhances overall network reliability. This model runs on edge servers and requires low-latency processing to react to user movements in real time.

### System Modules in Action

To efficiently manage the interdependent optimization models, the system employs several modules that work together seamlessly.

The Storage Module maintains a repository of optimization models, storing relevant attributes such as input/output data, resource requirements, and dependencies. By centralizing this information, the system ensures that models can be easily accessed, updated, and deployed when needed.

The Scheduler Module dynamically selects and schedules OMs based on network conditions. For example, during peak hours, the system prioritizes the Traffic Predictor to ensure that resource allocation and handover decisions are based on the most accurate predictions. This real-time scheduling allows for adaptive network management.

The Monitoring Module continuously collects key performance indicators (KPIs), including throughput, latency, and packet loss. It assesses traffic prediction accuracy, resource allocation efficiency, and handover success rates. This data plays a crucial role in system optimization, allowing for data-driven improvements.

The Optimizer Module analyzes the collected monitoring data to enhance the performance of each optimization model. If the Traffic Predictor's accuracy declines, the module can trigger retraining with recent data or adjust model parameters using Bayesian optimization. Similarly, the Resource Allocator can refine its algorithms based on real-time resource usage patterns, while the Handover Manager can modify its handover thresholds to prevent unnecessary or delayed transitions.

The Simulation Environment plays a crucial role in validating improvements before deployment. Optimized models are tested in realistic virtual scenarios, such as simulating rush-hour traffic in an urban environment. This allows the system to verify improvements and mitigate risks before integrating the updated models into the live network.

By orchestrating these interdependent optimization models, the system significantly enhances network efficiency. Resource utilization is improved, reducing congestion and ensuring optimal bandwidth distribution. Users benefit from a better experience due to reduced latency and fewer dropped calls. Additionally, automation in traffic management minimizes manual intervention, leading to cost savings and more efficient network operations.

This example demonstrates how the system effectively manages interdependent OMs, leveraging each module's capabilities to create a cohesive, high-performing OpenRAN environment. The result is a scalable, efficient network that adapts dynamically to user needs, showcasing the practical application of the described approach.

### Second Example: Power Optimization in 4G/5G Cell Networks Through Dynamic Antenna Management

Optimizing power consumption in 4G/5G cell networks is critical for reducing operational costs and minimizing environmental impact. This example demonstrates how the system orchestrates three interdependent OMs to manage power efficiently by dynamically deactivating antennas when they are not needed. By leveraging real-time data and predictive analytics, the system ensures that power-saving strategies do not compromise network performance.

### Traffic Load Predictor:

The Traffic Load Predictor model plays a key role in determining which network areas require active antennas and which can be temporarily deactivated. It analyzes historical traffic patterns, real-time user activity, and special event data to generate predictions of network demand in each cell. These predictions enable proactive resource management, ensuring that antennas remain active only when necessary. The model requires significant computational resources for training, often utilizing GPUs, while inference tasks rely on moderate CPU power. Its output, a forecast of traffic loads across different network cells, serves as an input for the Antenna Switching Optimizer.

### Power Consumption Model:

To complement traffic predictions, the Power Consumption Model estimates current and future energy consumption based on the network configuration. By analyzing historical energy usage patterns and real-time network conditions, it provides insights into potential power-saving opportunities. Running on central servers with access to extensive historical data, the model evaluates how different configurations affect power usage. Its estimations serve as an essential input for the Antenna Switching Optimizer, helping determine where energy efficiency improvements can be implemented.

### Antenna Switching Optimizer:

The Antenna Switching Optimizer determines which antennas can be deactivated while maintaining network performance. It processes inputs from the Traffic Load Predictor and the Power Consumption Model, taking into account traffic distribution, power savings potential, and network performance constraints. By balancing energy efficiency with service quality, the optimizer identifies antennas that can be temporarily switched off without negatively affecting user experience. Since real-time decision-making is crucial, this model operates with low-latency processing capabilities to respond quickly to changing network conditions.

### System Modules in Action

To manage the interaction between these optimization models, the system employs various modules that ensure seamless operation and continuous refinement.

The Storage Module maintains records of the three optimization models, storing detailed attributes such as input/output data, resource requirements, and dependencies. This centralized storage ensures efficient access, management, and updates of optimization models.

The Scheduler Module prioritizes the execution of the Antenna Switching Optimizer, particularly during off-peak hours, such as midnight to early morning, when traffic levels are lower. This allows the system to maximize power savings while ensuring uninterrupted service quality.

The Monitoring Module continuously collects real-time data on traffic patterns, energy usage, and network performance indicators such as coverage and throughput. This data is crucial for refining the predictions of the Traffic Load Predictor and the estimations of the Power Consumption Model, ensuring that antenna deactivation decisions are based on accurate and up-to-date information.

The Optimizer Module refines each optimization model based on collected monitoring data. If the Traffic Load Predictor's accuracy declines, it may be retrained with recent data or adjusted using parameter tuning techniques. The Power Consumption Model is refined by integrating newly collected historical data and adapting to evolving network configurations. The Antenna Switching Optimizer fine-tunes its algorithms to balance power savings while maintaining sufficient network coverage. Machine learning techniques may be used to enhance its decision-making process.

The Simulation Environment enables testing of power-saving strategies before live deployment. It simulates various scenarios, such as sudden traffic surges or hardware failures, to assess the impact of antenna switching on network performance and energy consumption. By validating different strategies in a controlled environment, the system ensures that energy efficiency improvements do not compromise connectivity or service quality.

By integrating these optimization models, the system significantly improves power efficiency while maintaining robust network performance. Efficient antenna management reduces energy consumption, lowering operational costs and contributing to environmental sustainability. Users benefit from uninterrupted service, as the system ensures that network coverage and performance remain optimal.

Furthermore, automation minimizes manual intervention, streamlining network operations and reducing human workload.

This example illustrates how the system effectively orchestrates interdependent optimization models to achieve dynamic and intelligent power management. By continuously adapting to network conditions and leveraging predictive analytics, the system enhances the scalability and efficiency of 4G/5G cell networks, creating a more sustainable and cost-effective infrastructure.

### Third Example: Power Optimization During Off-Peak Hours

In a mixed residential and commercial area, network traffic fluctuates throughout the day. While demand remains high during business hours, it significantly decreases at night. To optimize power consumption without compromising service quality, the system dynamically adjusts antenna activity based on real-time and historical data.

The Traffic Load Predictor forecasts network demand and identifies a substantial drop in traffic between midnight and 6 AM. By analyzing historical usage patterns and real-time user activity, it predicts which areas will experience low utilization during off-peak hours.

The Power Consumption Model assesses the potential energy savings of adjusting network configurations. It estimates that switching off antennas in low-traffic zones could reduce energy usage by approximately 20% while maintaining seamless connectivity for active users. This calculation ensures that power-saving measures do not degrade the overall quality of service.

Based on these insights, the Antenna Switching Optimizer determines which antennas can be temporarily deactivated. Taking into account predicted traffic loads, estimated energy consumption, and network performance constraints, it identifies specific antennas that can be safely switched off during the off-peak window.

To ensure these optimizations are executed efficiently, the Scheduler Module prioritizes the Antenna Switching Optimizer during off-peak hours. By frequently executing antenna deactivation processes during low-demand periods, the system maximizes energy savings while preventing unnecessary disruptions.

The Monitoring Module continuously tracks the impact of these power-saving actions. It collects key performance indicators such as network coverage, latency, and throughput to verify that service quality remains unaffected. The collected data is fed back into the system to refine future optimizations, ensuring continuous improvement and adaptation to evolving traffic patterns.

The implementation of this power optimization strategy provides multiple advantages:
- Cost Savings: Reducing energy consumption leads to lower operational expenses for network operators.
- Environmental Impact: Lower power usage contributes to decreased carbon emissions, supporting sustainable network operations.
- Network Efficiency: Dynamic antenna management ensures optimal resource utilization without affecting service quality.
- Scalability: The system can be expanded to accommodate larger networks, adapting to complex traffic patterns and varying power constraints.

This example illustrates how the proposed system effectively manages interdependent OMs in a general 4G/5G cell network context, focusing on power optimization through intelligent antenna management. By integrating traffic prediction, power modeling, and dynamic antenna switching, the system achieves significant energy savings while maintaining network performance.

The **figure** illustrates a structured workflow for selecting, deploying, monitoring, testing, and refining optimization models within an OpenRAN environment. The process involves multiple interconnected modules that ensure continuous adaptation and improvement of network optimization models.

### Step 1: Searching for the Best-Matching Optimization Models

The process begins with the scheduler module, which receives predefined optimization parameters as input. Based on these parameters, the scheduler searches the storage module for the most suitable optimization models (OMs). The storage module contains multiple OMs, initial and/or optimized OMs, described by different operational profiles, such as day and night profiles, each designed to address specific network conditions. These OMs include, for example, a traffic load predictor (TLP), a power consumption model (PC), and an antenna switching optimizer (AS).

### Step 2: Deploying the Selected Optimization Models into OpenRAN

Once the scheduler identifies the best-matching OMs, it deploys them into the OpenRAN environment. These OMs are then actively used to manage various network operations, such as traffic optimization, power efficiency management, and antenna utilization. The scheduler ensures that only the most relevant and effective models are deployed, preventing unnecessary computational load on the network.

### Step 3: Collecting Performance Data from the OpenRAN System

As the deployed OMs function within the OpenRAN environment, the monitoring module continuously collects real-time network data. This includes logs, key performance indicators (KPIs) such as throughput, latency, and packet loss, as well as the current state of the deployed optimization models. The monitoring module ensures that all relevant performance data is gathered and stored for further analysis.

### Step 4: Transmitting the Collected Data to the Optimizer Module

The collected network performance data is then transmitted to the optimizer module, which evaluates the effectiveness of the deployed OMs. By analyzing this data, the optimizer determines whether any refinements are required to maintain or improve network performance.

### Step 5: Retrieving the Current Optimization Models

To begin the refinement process, the optimizer module retrieves the latest versions of the optimization models from the storage module. This allows the optimizer to compare the current OMs with real-time network conditions and determine necessary improvements.

### Step 6: Testing the Optimization Models in the Simulation Environment

Before making any modifications to the OMs, the optimizer places them in a simulation environment for validation. This simulation environment acts as a digital twin of the OpenRAN network, replicating various network conditions, such as traffic surges, user mobility, and network congestion. The system evaluates how well the models perform under different simulated scenarios, collecting logs, performance data, and optimizer state feedback.

### Step 7: Refining the Optimization Models Based on Monitoring Data

Based on the simulation results and real-time performance data from the monitoring module, the optimizer module refines the optimization models. Adjustments may include tuning parameters, modifying algorithms, or incorporating new data trends to improve accuracy and efficiency. The optimizer ensures that the refined models meet predefined performance thresholds before they are stored for future use.

### Step 8: Storing the Improved Optimization Models for Future Use

Once the refinements are finalized, the optimizer module updates the storage module with the improved optimization models. These updated models replace outdated versions and are now available for future selection and deployment by the scheduler module. This ensures that the system continuously enhances its optimization strategies over time, adapting to evolving network conditions.

This process operates in a continuous loop, where newly collected network data from the monitoring module is fed back into the system to further refine and improve optimization models.

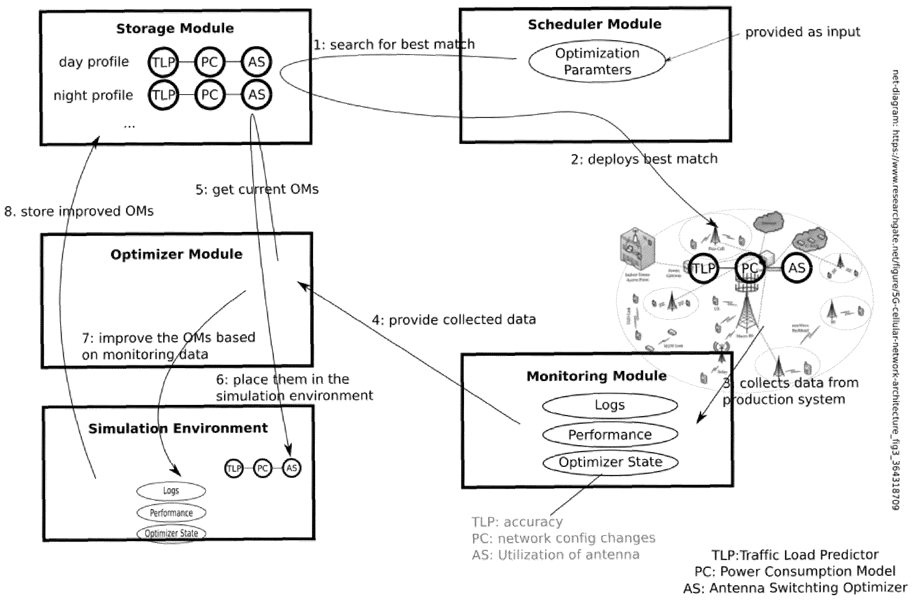

## Claims

1. A method for organizing and optimizing sets of dependent and/or interdependent optimization models (OMs) in an Open Radio Access Network (OpenRAN) environment, the method comprising:
- storing a set of OMs, especially initial OMs for network management, in a storage module, ,
- retrieving OMs from the storage module by a scheduler module, wherein the scheduler selects an optimized set of OMs for deployment based on predefined parameters,
- deploying the selected OMs into a live OpenRAN environment to manage network operations,
- a monitoring module collects network data from the deployed OMs, including especially performance metrics, logs, and optimizer state information, and forwards the collected data to an optimizer module,
- optimizing the deployed OMs using an optimizer module especially based on predifind objective functions and
- storing the optimized OMs back in the storage module, ensuring that future deployments use improved models especially selected according to objective function values.

2. Method according to claim 1, wherein the optimiser module
- evaluates OM performance under different network conditions based on predefined objective functions,
- refines dynamic OMs based on monitoring data, simulation results and optimization criteria derived from the objective functions, and
- a determines whether scenario adaptation is required by assessing deviations from expected performance relative to the objective functions.

3. Method according to claim 1 or 2,
wherein, during optimization, the OMs are placed in a digital twin environment,
wherein the optimizer module simulates OM performance under controlled network conditions, evaluates optimization results based on predefined the objective functions, and refines the OMs before redeployment.

4. Method according to one of the preceding claims,
wherein a continuous feedback loop is provided for optimizing OMs in OpenRAN by leveraging real-time performance data, digital twin-based validation, and iterative refinement, ensuring adaptability to changing network conditions.

5. Method according to one of the preceding claims,
wherein when simulating and optimizing the OM(s) in the digital twin environment, the optimizer module classifies OMs as static OMs, which remain unchanged, or dynamic OMs, which are subject to optimization, wherein classification is performed based on the evaluation of predefined objective functions.

6. Method according to one of the preceding claims,
wherein when searching for the best matching OMs, the scheduler module retrieves optimization parameters and searches for a set of optimized OMs from a storage module based on the generated scenario, wherein the searching is further guided by objective functions prioritizing key network performance indicators.

7. Method according to one of the preceding claims,
Wherein the optimizer module evaluates interdependencies between multiple OMs, resolving potential conflicts and ensuring coordinated optimization of interdependent models.

8. Method according to one of the preceding claims,
wherein the optimizer module simultaneously optimizes multiple objective functions, including latency, energy efficiency, resource utilization, Quality of Service (QoS), and throughput.

9. Method according to one of the preceding claims,
wherein the optimizer module dynamically modifies the scenario based on real-time network conditions, historical data trends, and detected deviations from expected performance metrics.

10. Method according to one of the preceding claims,
wherein the optimizer module adjusts optimization strategies based on the contextual environment, including urban vs. rural deployment, indoor vs. outdoor conditions, and varying user mobility patterns.

11. Method according to one of the preceding claims,
wherein the input data for the digital twin module comprises:
- static data, including cell placement, infrastructure details, and network topology, and/or
- historical data, enabling trend analysis and scenario testing without requiring real-time updates and/or
- dynamic data, including real-time network conditions, traffic fluctuations, and system load variations, allowing for continuous adaptation and refinement of OMs.

12. A system for organizing and optimizing sets of dependent and/or interdependent optimization models (OMs) in an Open Radio Access Network (OpenRAN) environment, the system comprising:
- a storage module configured to store a set of OMs providing an initial configuration for network management and to store optimized OMs for future deployments,
- a scheduler module configured to retrieve OMs from the storage module and select an optimized set of OMs for deployment based on predefined network parameters,
- a deployment module configured to deploy the selected OMs into a live OpenRAN environment to manage network operations,
- a monitoring module configured to collect network data from the deployed OMs, including performance metrics, logs, and optimizer state information, and to forward the collected data to an optimizer module,
- an optimizer module configured to optimize the deployed OMs by refining their parameters based on the collected data and
- a control module configured to update the storage module with the optimized OMs to ensure that future deployments use improved models.

13. System according to claim 12,
wherein the optimizer module is further configured to:
- evaluate OM performance under different network conditions based on predefined objective functions,
- refine dynamic OMs using monitoring data, simulation results, and optimization criteria derived from the objective functions, and
- determine whether scenario adaptation is required by assessing deviations from expected performance relative to the objective functions.

14. System according to claim 12 or 13,
wherein the optimizer module is further configured to place the OMs in a digital twin environment for simulation, wherein the optimizer module tests OM performance under controlled network conditions before optimization and refines the models based on simulation results before updating them in the storage module.
